(19) Europäisches Patentamt
European Patent Office
Office européen des brevets

(11) EP 4 398 346 B1

(12) EUROPEAN PATENT SPECIFICATION

(45) Date of publication and mention of the grant of the patent:
**18.03.2026 Bulletin 2026/12**

(21) Application number: **23216900.3**

(22) Date of filing: **14.12.2023**

(51) International Patent Classification (IPC):
***H01M 4/58** (2010.01)* ***H01M 10/00** (2006.01)*
***H01M 10/0567** (2010.01)* ***H01M 10/0525** (2010.01)*
***H01M 10/0568** (2010.01)* ***H01M 10/0569** (2010.01)*

(52) Cooperative Patent Classification (CPC):
**H01M 10/0567; H01M 4/5825; H01M 10/0525; H01M 10/0568; H01M 10/0569;** H01M 2300/0025; Y02E 60/10

(54) **ELECTROLYTE FOR LITHIUM SECONDARY BATTERY AND LITHIUM SECONDARY BATTERY INCLUDING THE SAME**

ELEKTROLYT FÜR LITHIUMSEKUNDÄRBATTERIE UND LITHIUMSEKUNDÄRBATTERIE DAMIT

ÉLECTROLYTE POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.12.2022 KR 20220177387**

(43) Date of publication of application:
**10.07.2024 Bulletin 2024/28**

(73) Proprietors:
- **SK On Co., Ltd.**
  **Seoul 03161 (KR)**
- **SK Innovation Co., Ltd.**
  **Seoul 03188 (KR)**

(72) Inventors:
- **PARK, Min Woo**
  **34124 Daejeon (KR)**
- **KIM, Myoung Lae**
  **34124 Daejeon (KR)**
- **JEON, Hyun Ji**
  **34124 Daejeon (KR)**

(74) Representative: **Stolmár & Partner Patentanwälte PartG mbB**
**Blumenstraße 17**
**80331 München (DE)**

(56) References cited:
**CN-B- 103 094 614**
**US-A1- 2006 269 846**
**US-A1- 2013 216 897**
**US-A1- 2016 248 121**
**US-A1- 2020 388 837**
**US-B2- 11 398 641**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 398 346 B1

## Description

BACKGROUND OF THE INVENTION

1. Field of the Invention

The present invention relates to a lithium secondary battery including an electrolyte. More specifically, the electrolyte includes a solvent and an electrolyte salt.

2. Description of the Related Art

A secondary battery is a battery which can be repeatedly charged and discharged, and has been widely applied to portable electronic devices such as a mobile phone, a laptop computer, etc. or electric vehicles as a power source thereof.

A lithium secondary battery has a high operating voltage and a high energy density per unit weight, and is advantageous in terms of a charging speed and light weight. In this regard, the lithium secondary battery has been actively developed and applied as a power source.

For example, the lithium secondary battery may include: an electrode assembly including a cathode, an anode, and a separation membrane interposed between the cathode and the anode; and an electrolyte in which the electrode assembly is impregnated in a case.

As an active material for a cathode of a lithium secondary battery, a lithium metal oxide may be used. Examples of the lithium metal oxide may include a nickel-based lithium metal oxide.

A lithium secondary battery having longer life-span, high capacity, and operational stability is required as the application range thereof is expanded. Accordingly, it is necessary for the lithium secondary battery to provide uniform output and capacity even during repeated charging and discharging.

However, according to the repeated charging and discharging, the output and capacity may be decreased due to damage to the surface of the nickel-based lithium metal oxide used as a cathode active material, and a side reaction between the nickel-based lithium metal oxide and the electrolyte may occur. In particular, when the lithium secondary battery is placed in a high-temperature environment, due to the repetitive charging/discharging and overcharging, a swelling phenomenon of the battery (an increase in the battery thickness due to gases generated inside the battery), an increase in the internal resistance of the battery, a deterioration in life-span characteristics of the battery, and the like are caused.

For example, in the case of a non-aqueous electrolyte for a lithium secondary battery to which an additive is added as disclosed in Korean Patent Registration No. 10-2411934, high and low temperature characteristics of the battery may be improved, but operational reliability may be decreased. Further examples of a lithium secondary battery including a non-aqueous electrolyte are described in CN 103 094 614 B, US 2013/216897 A1 and US 2006/269846 A1.

SUMMARY OF THE INVENTION

An object of the present invention is to provide an electrolyte for a lithium secondary battery having improved low and/or high temperature characteristics.

Another object of the present invention is to provide a lithium secondary battery which includes the electrolyte having improved low and/or high temperature characteristics.

To achieve one or more of the above objects, according to an aspect of the present invention, there is provided a lithium secondary battery as defined in independent claim 1, which comprises a cathode comprising a cathode active material; an anode comprising an anode active material; a separation membrane disposed between the cathode and the anode; and an electrolyte, the electrolyte including an additive including a compound represented by Formula 1 below; an organic solvent; a lithium salt; and an auxiliary additive comprising a cyclic carbonate compound and a fluorine-substituted cyclic carbonate compound:

[Formula 1]

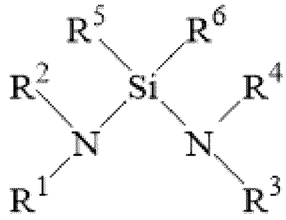

wherein in Formula 1, $R^1$ to $R^4$ are each independently hydrogen, or a substituted or unsubstituted $C_1$-$C_{10}$ alkyl group, and $R^5$ and $R^6$ are each independently hydrogen, a substituted or unsubstituted $C_1$-$C_{10}$ alkyl group, or a substituted or unsubstituted amine group.

In some embodiments, $R^1$ to $R^4$ may be each independently a substituted or unsubstituted $C_1$-$C_6$ alkyl group, and/or $R^5$ and $R^6$ may be each independently a substituted or unsubstituted $C_1$-$C_6$ alkyl group.

In some embodiments, $R^1$ to $R^4$ may be each independently a substituted or unsubstituted $C_{1-2}$ alkyl group, and/or $R^5$ and $R^6$ may be each independently a substituted or unsubstituted $C_{1-2}$ alkyl group.

In some embodiments, the compound represented by Formula 1 may be a compound represented by Formula 1-1 below:

[Formula 1-1]

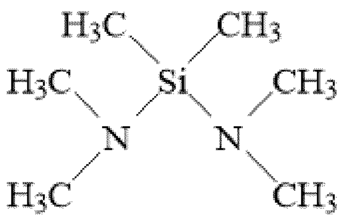

In some embodiments, the additive may be included in an amount of 0.1 to 10% by weight based on a total weight of the electrolyte.

In some embodiments, the additive may be included in an amount of 0.5 to 5% by weight based on the total weight of the electrolyte.

In some embodiments, the organic solvent may include at least one solvent selected from the group consisting of a carbonate solvent, an ester solvent, an ether solvent, a ketone solvent, an alcohol solvent, an aprotic solvent, and mixtures thereof.

In some embodiments, the auxiliary additive further comprises at least one selected from the group consisting of a sultone compound, a cyclic sulfate compound, a borate compound, and mixtures thereof.

In some embodiments, the auxiliary additive may be included in an amount of 0.01 to 15% by weight based on the total weight of the electrolyte.

In some embodiments, the auxiliary additive may be included in an amount of 0.5 to 10% by weight based on the total weight of the electrolyte.

According to the invention, the cathode active material includes lithium metal phosphate particles represented by Formula 4 below:

[Formula 4] $Li_wFe_xP_yO_{4+z}$

wherein in Formula 4, w, x, y and z are in a range of $0.9 \le w \le 1.2$, $0.99 \le x \le 1.01$, $0.9 \le y \le 1.2$, and $-0.1 \le z \le 0.1$, respectively.

The electrolyte including an additive used as an electrolyte for a lithium secondary battery according to the invention may form a robust solid electrolyte interphase (SEI) on the surface of an electrode.

The lithium secondary battery according to the invention includes the electrolyte for a lithium secondary battery. Accordingly, the lithium secondary battery may have reduced resistance and/or improved discharge capacity at a low temperature, suppressed increase in the resistance and/or thickness in a high temperature environment, and/or improved capacity retention rate.

BRIEF DESCRIPTION OF THE DRAWINGS

FIG. 1 is a plan view schematically illustrating a lithium secondary battery according to exemplary embodiments; and FIG. 2 is a schematic cross-sectional view of the lithium secondary battery according to exemplary embodiments.

DESCRIPTION OF THE INVENTION

According to embodiments of the present invention, there is provided a lithium secondary battery including an electrolyte which includes an additive having a predetermined chemical structure.

Hereinafter, specific embodiments of the present invention will be described in more detail with reference to the accompanying drawings.

As used herein, the singular form of "a", "an", and "the" include plural referents unless the context clearly states otherwise.

For the purposes of this disclosure, unless otherwise indicated, all numbers expressing quantities of ingredients, reaction conditions, dimensions, physical characteristics, and so forth used in the specification and claims are to be understood as being modified in all instances by the term "about." Unless indicated to the contrary, the numerical parameters set forth in this disclosure are approximations that can vary depending upon the desired properties sought to be obtained by the present invention.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in their respective testing measurements.

Also, it should be understood that any numerical range recited herein is intended to include all sub-ranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

As used herein, the "A compound" may refer to a compound including an A unit attached to a matrix, etc., of the "A compound" or a derivative of the compound.

As used herein, the "$C_a$-$C_b$" may refer to "the number of carbon (C) atoms of a to b."

**<Electrolyte for a lithium secondary battery>**

An electrolyte for a lithium secondary battery (hereinafter, may be abbreviated as an electrolyte) includes: a lithium salt; an organic solvent; an additive including a compound represented by Formula 1; and an auxiliary additive comprising a cyclic carbonate compound and a fluorine-substituted cyclic carbonate compound.

Hereinafter, components of the present invention will be described in more detail.

**Additive**

The electrolyte includes an additive including a compound represented by Formula 1 below.

[Formula 1]

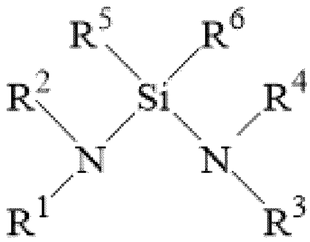

In Formula 1, each of $R^1$ to $R^4$ is independently the same as or different from each other.

$R^1$ is hydrogen, or a substituted or unsubstituted $C_1$-$C_{10}$ alkyl group, or may be a substituted or unsubstituted

$C_1$-$C_6$ alkyl group, or may be a substituted or unsubstituted $C_{1-2}$ alkyl group.

$R^2$ is hydrogen, or a substituted or unsubstituted $C_1$-$C_{10}$ alkyl group, or may be a substituted or unsubstituted $C_1$-$C_6$ alkyl group, or may be a substituted or unsubstituted $C_{1-2}$ alkyl group.

$R^3$ is hydrogen, or a substituted or unsubstituted $C_1$-$C_{10}$ alkyl group, or may be a substituted or unsubstituted $C_1$-$C_6$ alkyl group, or may be a substituted or unsubstituted $C_{1-2}$ alkyl group.

$R^4$ is hydrogen, or a substituted or unsubstituted $C_1$-$C_{10}$ alkyl group, or may be a substituted or unsubstituted $C_1$-$C_6$ alkyl group, or may be a substituted or unsubstituted $C_{1-2}$ alkyl group.

$R^5$ is hydrogen, or a substituted or unsubstituted $C_1$-$C_{10}$ alkyl group, or a substituted or unsubstituted amine group, or may be a substituted or unsubstituted $C_1$-$C_6$ alkyl group, or may be a substituted or unsubstituted $C_{1-2}$ alkyl group.

$R^6$ is hydrogen, a substituted or unsubstituted $C_1$-$C_{10}$ alkyl group, or a substituted or unsubstituted amine group, or may be a substituted or unsubstituted $C_1$-$C_6$ alkyl group, or may be a substituted or unsubstituted $C_{1-2}$ alkyl group.

For example, the alkyl group may mean a portion of a molecule composed of carbon and hydrogen. The alkyl group may mean a form in which one hydrogen atom is separated from one terminal carbon atom of alkane ($-C_nH_{2n}-$). For example, $CH_3$-$CH_2$-$CH_2$- may mean a propyl group.

For example, the amine group may mean an organic nitrogen compound in which one or more of hydrogen atoms of ammonia ($NH_3$) is substituted with an alkyl group. For example, the amine group may mean $-RNH_2$, $-R_2NH$, and $-R_3N$.

For example, the meaning of "substituted" may mean that a hydrogen atom of the alkyl group is substituted with a substituent, such that the substituent is bonded to a carbon atom of the alkyl group. For example, the substituent may be at least one of halogen, a $C_1$-$C_6$ alkyl group, a $C_2$-$C_6$ alkenyl group, an amino group, a $C_1$-$C_6$ alkoxy group, a $C_3$-$C_7$ cycloalkyl group, and a 5- to 7-membered heterocycloalkyl group.

When the additive including the compound represented by Formula 1 is included in the electrolyte for a secondary battery, a formation of a robust solid electrolyte membrane (SEI) may be induced on an anode due to strong reductive decomposition tendency thereof, thus to form an amine group-based solid electrolyte membrane. Therefore, additional decomposition of $LiPF_6$ salt may be suppressed, decomposition of an organic solvent (e.g., EC, EMC, etc.) may be effectively prevented at a high temperature, and/or generation of gas and increase in a cell thickness may be decreased.

In addition, movement of Li ions between the electrode and the electrolyte may be facilitated by forming a film with a low resistance, thereby improving the discharge capacity at a low temperature. Further, a long-term performance of the battery may be improved by removing moisture and/or HF remaining in the electrolyte due to an N-Si bond.

In some embodiments, the compound represented by Formula 1 may include bis(dimethylamino)dimethylsilane. In some embodiments, the bis(dimethylamino)dimethylsilane may be represented by Formula 1-1 below.

[Formula 1-1]

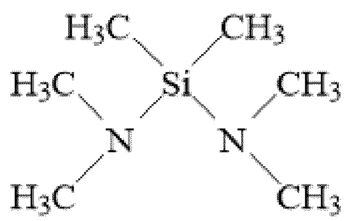

For example, when the bis(dimethylamino)dimethylsilane is included in the electrolyte for a secondary battery as an additive, a stable SEI film may be formed on an electrode by two amine groups. Accordingly, a lithium secondary battery having improved high-temperature storage characteristics and/or low-temperature characteristics may be provided. In addition, by suppressing a decomposition of the electrolyte due to a reaction between the electrolyte and the anode, generation of gas may also be reduced.

According to some embodiments, to facilitate formation of sufficient passivation and the formation of stable SEI film, a content of the additive may be 0.1% by weight ("wt.%") or more, 0.2 wt.% or more, 0.3 wt.% or more, 0.4 wt.% or more, 0.5 wt.% or more, or 1 wt.% or more based on a total weight of the electrolyte. In some embodiments, to facilitate movement of lithium ions and the activity of active material in the electrolyte, the content of the additive may be 10 wt.% or less, 9 wt.% or less, 7 wt.% or less, 6 wt.% or less, 5 wt.% or less, 4.5 wt.% or less, 4 wt.% or less, 3.5 wt.% or less, 3 wt.% or less, or 2 wt.% or less based on the total weight of the electrolyte.

In some embodiments, the content of the additive may be 0.1 to 7 wt.%, or 0.5 to 5 wt. %. Within the above range, the passivation of the above-described electrode may be sufficiently implemented, and both high temperature characteristics and low temperature characteristics may be improved without excessively inhibiting the movement of lithium ions and the activity of the cathode active material.

## Auxiliary additive

The electrolyte further includes an auxiliary additive comprising a cyclic carbonate compound and a fluorine-substituted cyclic carbonate compound together with the above-described additive.
In some embodiments, the auxiliary additive may further include, for example, a sultone compound, a cyclic sulfate compound, and/or a phosphate compound.
In some embodiments, the amount of auxiliary additive may be , for example, 15 wt.% or less, 14 wt.% or less, 13 wt.% or less, 12 wt.% or less, 11 wt.% or less, 10 wt.% or less, 9 wt.% or less, 8 wt.% or less, 7 wt.% or less, 6 wt.% or less, 5 wt.% or less, 4 wt.% or less, 3 wt.% or less, 2 wt.% or less, or 1 wt.% or less based upon a total weight of the non-aqueous electrolyte, in consideration of the action with a main additive including the compound represented by Formula 1. In some embodiments, the amount of auxiliary additive may be, for example, 0.01 wt.% or more, 0.02 wt.% or more, 0.03 wt.% or more, 0.05 wt.% or more, 0.1 wt.% or more, 0.2 wt.% or more, 0.3 wt.% or more, 0.4 wt.% or more, or 0.5 wt.% or more in consideration of the stabilization of the SEI film.
In some embodiments, the auxiliary additive may be included in an amount of about 0.01 to 15 wt.%, or 0.1 to 15 wt.%, or 0.5 to 10 wt.%, based on the total weight of the non-aqueous electrolyte. Within the above range, durability of the protective film may be improved, and/or high and/or low temperature properties may be improved without inhibiting the role of the main additive.
In some embodiments, the cyclic carbonate compound may include vinylene carbonate (VC), vinylethylene carbonate (VEC), etc.
In some embodiments, the fluorine-substituted cyclic carbonate compound may include fluoroethylene carbonate (FEC).
In some embodiments, the sultone compound may include 1,3-propane sultone, 1,3-propene sultone, 1,4-butane sultone, etc.
In some embodiments, the cyclic sulfate compound may include 1,2-ethylene sulfate, 1,2-propylene sulfate, etc.
In some embodiments, the phosphate compound may include lithium difluoro (oxalate) borate (LiFOB), lithium bis (oxalate) borate ($LiB(C_2O_4)_2$, LiBOB), etc., as a borate compound.
In some embodiments, the cyclic carbonate compound and the fluorine-substituted cyclic carbonate compound may be used together as the auxiliary additive.
When additionally including the auxiliary additive, durability and/or stability of the electrode may be further improved. The auxiliary additive may be included in an appropriate amount within a range that does not inhibit the movement of lithium ions in the electrolyte.

## Organic solvent and lithium salt

In some embodiments, the organic solvent may include, for example, an organic compound which provides sufficient solubility to the lithium salt, the additive and the auxiliary additive, and does not have reactivity in the battery.
In some embodiments, the organic solvent may include at least one of a carbonate solvent, an ester solvent, an ether solvent, a ketone solvent, an alcohol solvent and an aprotic solvent.
In some embodiments, the organic solvent may include a carbonate solvent.
In some embodiments, the carbonate solvent may include a linear carbonate solvent and/or a cyclic carbonate solvent.
In some embodiments, the linear carbonate solvent may include at least one of dimethyl carbonate (DMC), ethyl methyl carbonate (EMC), diethyl carbonate (DEC), methyl propyl carbonate, ethyl propyl carbonate and dipropyl carbonate.
In some embodiments, the cyclic carbonate solvent may include at least one of ethylene carbonate (EC), propylene carbonate (PC), and butylene carbonate.
In some embodiments, the organic solvent may include more of the linear carbonate solvent than the cyclic carbonate solvent based on a volume of the linear carbonate solvent and the cyclic carbonate solvent.
In some embodiments, a mixing volume ratio of the linear carbonate solvent and the cyclic carbonate solvent may be 1:1 to 9:1, or 1.5:1 to 4:1.
In some embodiments, the ester solvent may include at least one of methyl acetate (MA), ethyl acetate (EA), n-propyl acetate (n-PA), 1,1-dimethylethyl acetate (DMEA), methyl propionate (MP) and ethyl propionate (EP).
In some embodiments, the ether solvent may include at least one of dibutyl ether, tetraethylene glycol dimethyl ether (TEGDME), diethylene glycol dimethyl ether (DEGDME), dimethoxyethane, tetrahydrofuran (THF) and 2-methyltetrahydrofuran.
In some embodiments, the ketone solvent may include cyclohexanone.
In some embodiments, the alcohol solvent may include at least one of ethyl alcohol and isopropyl alcohol.
In some embodiments, the aprotic solvent may include at least one of a nitrile solvent, an amide solvent (e.g.,

dimethylformamide), a dioxolane solvent (e.g., 1,3-dioxolane), and a sulfolane solvent.

The electrolyte includes a lithium salt, and the lithium salt may be expressed as $Li^+X^-$.

In some embodiments, the anion ($X^-$) of the lithium salt may be any one selected from $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In some embodiments, the lithium salt may include at least one of $LiBF_4$ and $LiPF_6$.

In some embodiments, the lithium salt may be included in a concentration of 0.01 to 5 M, or 0.01 to 2 M based on the organic solvent. Within the above concentration range, lithium ions and/or electrons may smoothly move during charging and discharging of the battery.

**<Lithium secondary battery>**

A lithium secondary battery according to the invention includes a cathode comprising a cathode active material; an anode comprising an anode active material; a separation membrane disposed between the cathode and the anode; and an electrolyte which includes an additive including the compound represented by Formula 1 above, an organic solvent, a lithium salt and an auxiliary additive comprising a cyclic carbonate compound and a fluorine-substituted cyclic carbonate compound.

FIG. 1 is a schematic plan view illustrating the lithium secondary battery according to exemplary embodiments, and FIG. 2 is a cross-sectional view taken on line I-I' in FIG. 1.

Referring to FIGS. 1 and 2, the lithium secondary battery may include an electrode assembly 150 including a cathode 100, an anode 130, and a separation membrane 140 interposed between the cathode and the anode. The electrode assembly 150 may be housed in a case 160 together with the electrolyte according to the above-described exemplary embodiments and impregnated.

The cathode 100 may include a cathode current collector 105 and a cathode active material layer 110 on the cathode current collector 105.

In some embodiments, the cathode active material layer 110 may include a cathode active material and a cathode binder, and may further include a conductive material.

In some embodiments, the cathode 100 may be prepared by mixing and stirring the cathode active material, the cathode binder, and the conductive material, etc., in a dispersion medium to prepare a cathode slurry, and then applying the cathode slurry to the cathode current collector 105, followed by drying and rolling the same.

In some embodiments, the cathode current collector 105 may include stainless steel, nickel, aluminum, titanium, copper, and/or an alloy thereof.

In some embodiments (not according to the invention), the cathode active material may include lithium metal oxide particles capable of reversibly intercalating and deintercalating lithium ions.

The cathode active material may include lithium metal oxide particles including nickel.

The lithium metal oxide particles may include 80 mol% or more of nickel based on a total number of moles of all elements except for lithium and oxygen. In this case, it is possible to implement a lithium secondary battery having a high capacity.

The lithium metal oxide particles may include 83 mol% or more, 85 mol% or more, 90 mol% or more, or 95 mol% or more of nickel based on the total number of moles of all elements except for lithium and oxygen.

The lithium metal oxide particles may further include at least one of cobalt and manganese.

The lithium metal oxide particles may further include cobalt and manganese. In this case, it is possible to implement a lithium secondary battery having excellent output characteristics and penetration stability.

The lithium metal oxide particles may be represented by Formula 2 below.

[Formula 2] $$Li_{x1}Ni_{(1-a-b)}Co_aM_bO_y$$

In Formula 2, M may be at least one of Al, Zr, Ti, Cr, B, Mg, Mn, Ba, Si, Y, W and Sr, and x, y, a and b may be in a range of $0.9 \leq x1 \leq 1.2$, $1.9 \leq y \leq 2.1$, and $0 \leq a+b \leq 0.5$, respectively.

"a+b" may satisfy $0<a+b\leq 0.4$, $0<a+b\leq 0.3$, $0<a+b\leq 0.2$, $0<a+b\leq 0.17$, $0<a+b\leq 0.15$, $0<a+b\leq 0.12$, or $0<a+b\leq 0.1$.

The lithium metal oxide particles may further include a coating element or a doping element. The coating element or the doping element may include Al, Ti, Ba, Zr, Si, B, Mg, P, Sr, W, La, and/or an alloy thereof, and/or an oxide thereof. In this case, it is possible to implement a lithium secondary battery having more improved life-span characteristics.

According to the invention, the cathode active material includes lithium iron phosphate (LFP) oxide particles. In some embodiments (not according to the invention), the lithium iron phosphate oxide particles may be represented by Formula 3 below.

[Formula 3] $LiFe_{1-x2}M'_{x2}PO_4$

In Formula 3, M' may be at least one of Ni, Co, Mn, Al, Mg, Y, Zn, In, Ru, Sn, Sb, Ti, Te, Nb, Mo, Cr, Zr, W, Ir and V, and x2 may be in a range of $0 \leq x2 \leq 1$.

In some embodiments, the lithium iron phosphate oxide particles may include $LiFePO_4$. The lithium iron phosphate oxide particles have an olivine structure, which is a very stable structure compared to a layered structure, and have an improved long life-span. However, output characteristics of the lithium iron phosphate oxide particles may be deteriorated at a temperature below zero.

According to the invention, the cathode active material includes lithium metal phosphate particles represented by Formula 4 below.

[Formula 4] $Li_wFe_xP_yO_{4+z}$

In Formula 4, w, x, y and z may be in a range of $0.9 \leq w \leq 1.2$, $0.99 \leq x \leq 1.01$, $0.9 \leq y \leq 1.2$, and $-0.1 \leq z \leq 0.1$, respectively.

Accordingly, when adding the above-described additive to the electrolyte, low-temperature characteristics of the lithium secondary battery may be improved. In some embodiments, an additive including the compound represented by Formula 1 may be included in the electrolyte for a lithium secondary battery. In some embodiments, an additive including the compound represented by Formula 1-1 above may be included.

In some embodiments, the cathode binder may include an organic binder such as polyvinylidene fluoride (PVDF), vinylidene fluoride-hexafluoropropylene copolymer (PVDF-co-HFP), polyacrylonitrile, and polymethyl methacrylate; and/or an aqueous binder such as styrene-butadiene rubber (SBR). In addition, in some embodiments, the cathode binder may be used together with a thickener, such as for example carboxymethyl cellulose (CMC).

In some embodiments, the conductive material may include a carbon-based conductive material, such as graphite, carbon black, graphene, and/or carbon nanotubes; a metal-based conductive material including tin, tin oxide, titanium oxide; and/or a perovskite material, such as $LaSrCoO_3$, and/or $LaSrMnO_3$.

In some embodiments, the anode 130 may include an anode current collector 125 and an anode active material layer 120 on the anode current collector 125.

In some embodiments, the anode active material layer 120 may include an anode active material and an anode binder, and further include a conductive material.

In some embodiments, the anode 130 may be prepared by mixing and stirring the anode active material, the anode binder, the conductive material, etc. in a solvent to prepare an anode slurry, and then applying the anode slurry to the anode current collector 125, followed by drying and rolling the same.

In some embodiments, the anode current collector 125 may include gold, stainless steel, nickel, aluminum, titanium, copper and/or an alloy thereof. In some embodiments, the anode current collector may include copper or a copper alloy.

In some embodiments, the anode active material may be a material capable of intercalating and deintercalating lithium ions. In some embodiments, the anode active material may include a lithium alloy, a carbon-based material, a silicon-based material, etc.

In some embodiments, the lithium alloy may include aluminum, zinc, bismuth, cadmium, antimony, silicon, lead, tin, gallium, indium, etc.

In some embodiments, the carbon-based active material may include crystalline carbon, amorphous carbon, carbon composite, carbon fiber, etc.

In some embodiments, the amorphous carbon may include hard carbon, cokes, mesocarbon microbead (MCMB) calcined at 1500°C or lower, mesophase pitch-based carbon fiber (MPCF), etc. In some embodiments, the crystalline carbon may include natural graphite, graphite cokes, graphite MCMB, graphite MPCF, etc.

In some embodiments, the anode active material may include a silicon-based active material. In some embodiments, the silicon-based active material may include Si, $SiO_x$ ($0<x<2$), Si/C, SiO/C, Si-metal, etc. In this case, it is possible to implement a lithium secondary battery having a high capacity.

In some embodiments, when the anode active material includes the silicon-based active material, there may be a problem in that a thickness of the battery is increased at the time of repeated charging and discharging. The lithium secondary battery according to exemplary embodiments may include the above-described electrolyte to relieve a thickness increase rate of the battery.

In some embodiments, the silicon-based active material in the anode active material may be included in a content of 1 to 20 wt.%, 1 to 15 wt.%, or 1 to 10 wt.%.

The anode binder and the conductive material may be substantially the same as or similar to the above-described cathode binder and the conductive material. In some embodiments, the anode binder may be an aqueous binder such as styrene-butadiene rubber (SBR). In addition, in some embodiments, the anode binder may be used together with a thickener, such as carboxymethyl cellulose (CMC).

In some embodiments, a separation membrane 140 may be interposed between the cathode 100 and the anode 130.

In some embodiments, the anode 130 may have an area greater than that of the cathode 100. In this case, lithium ions generated from the cathode 100 may smoothly move to the anode 130 without precipitation in the middle.

In some embodiments, the separation membrane 140 may include a porous polymer film made of a polyolefin polymer such as ethylene homopolymer, propylene homopolymer, ethylene/butene copolymer, ethylene/hexene copolymer, ethylene/methacrylate copolymer, etc. Alternatively, in some embodiments, the separation membrane 140 may include a nonwoven fabric made of glass fiber having a high melting point, polyethylene terephthalate fiber, etc.

In some embodiments, an electrode cell may be formed including the cathode 100, the anode 130, and the separation membrane 140.

In some embodiments, a plurality of electrode cells may be laminated to form an electrode assembly 150. In some embodiments, the electrode assembly 150 may be formed by winding, lamination, z-folding, etc., the separation membrane 140.

The lithium secondary battery according to exemplary embodiments may include: a cathode lead 107 connected to the cathode 100 and protruding to an outside of the case 160; and an anode lead 127 connected to the anode 130 and protruding to the outside of the case 160.

In some embodiments, the cathode 100 and the cathode lead 107 may be electrically connected with each other. Similarly, the anode 130 and the anode lead 127 may be electrically connected with each other.

In some embodiments, the cathode lead 107 may be electrically connected to the cathode current collector 105. In addition, the anode lead 127 may be electrically connected to the anode current collector 125.

In some embodiments, the cathode current collector 105 may include a protrusion part (cathode tab, not illustrated) on one side. The cathode active material layer 110 may not be formed on the cathode tab. The cathode tab may be formed integrally with the cathode current collector 105 or may be connected thereto by welding or the like. The cathode current collector 105 and the cathode lead 107 may be electrically connected with each other through the cathode tab.

Similarly, the anode current collector 125 may include a protrusion part (anode tab, not illustrated) on one side. The anode active material layer 120 may not be formed on the anode tab. The anode tab may be formed integrally with the anode current collector 125 or may be connected thereto by welding or the like. The anode current collector 125 and the anode lead 127 may be electrically connected with each other through the anode tab.

In some embodiments, the electrode assembly 150 may include a plurality of cathodes and a plurality of anodes. In some embodiments, the plurality of cathodes and anodes may be disposed alternately with each other, and the separation membranes may be interposed between the cathodes and the anodes. Accordingly, the lithium secondary battery according to an embodiment of the present invention may include a plurality of cathode tabs and a plurality of anode tabs protruding from each of the plurality of cathodes and the plurality of anodes.

In some embodiments, the cathode tabs (or, the anode tabs) may be laminated, compressed, and welded to form a cathode tab laminate (or, an anode tab laminate). The cathode tab laminate may be electrically connected to the cathode lead 107. In addition, the anode tab laminate may be electrically connected to the anode lead 127.

In some embodiments, the electrode assembly 150 may be housed in the case 160 together with the above-described electrolyte to form a lithium secondary battery.

The lithium secondary battery may be manufactured, in some embodiments, in a cylindrical shape, a square shape, a pouch type or a coin shape.

Hereinafter, preferred examples and comparative examples of the present invention will be described. However, the following examples are only preferred examples of the present invention, and the present invention is not limited thereto.

**Examples and Comparative Examples <Preparative Example>**

**(1) Synthesis Example of Additive I (bis(dimethylamino)dimethylsilane)**

Dimethyldichlorosilane (1.3g, 10.1 mmol) and 30 mL of pentane were added to a round-bottom flask, followed by stirring. Gaseous dimethylamine was added to the stirred solution and bubbled for 15 minutes. Then, the resulting solid was filtered and washed with pentane. A solvent was removed from the filtrate under reduced pressure and dried to obtain 1.4 g of colorless liquid Additive I (bis(dimethylamino)dimethylsilane) compound. The obtained compound was evaluated by nuclear magnetic resonance (NMR) spectroscopy, and results thereof were as follows.
$^1$H-NMR (500 MHz, $C_6D_6$): 2.44 (12H, s), -0.08 (6H, s)

**(2) Preparation of electrolyte**

A 1.2 M $LiPF_6$ solution (a mixed solvent of EC/EMC in a volume ratio of 25:75) was prepared.

Electrolytes of examples and comparative examples were prepared by mixing the $LiPF_6$ solution with additives as shown in Table 1 below based on the total weight of the electrolyte.

**(3) Preparation of LFP-based lithium secondary battery samples**

A cathode slurry was prepared by dispersing $LiFePO_4$, carbon black and polyvinylidene fluoride (PVDF) in NMP in a weight ratio of 98:1:1.

The cathode slurry was uniformly applied to a region of an aluminum foil having a protrusion part (cathode tab) on one side except for the protrusion part, followed by drying and rolling the same to prepare a cathode.

An anode slurry was prepared by dispersing an anode active material in which graphite and SiOx ($0<x<2$) were mixed in a weight ratio of 91:6, styrene-butadiene rubber (SBR) and carboxymethyl cellulose (CMC) in water in a weight ratio of 97:0.1:2.9.

The anode slurry was uniformly applied to a region of a copper foil having a protrusion part (anode tab) on one side except for the protrusion part, followed by drying and rolling the same to prepare an anode.

An electrode assembly was formed by disposing a polyethylene separation membrane between the cathode and the anode. Next, a cathode lead and an anode lead were welded and connected to the cathode tab and the anode tab, respectively.

The electrode assembly was housed in a pouch (case) so that some regions of the cathode lead and the anode lead were exposed to an outside of the pouch, followed by sealing three sides of the pouch except for a side of an electrolyte injection part.

After injecting the electrolyte prepared in the above (2), sealing the side of the electrolyte injection part, and then impregnating for 12 hours, lithium secondary battery samples of Examples 1 to 5 and Comparative Examples 1 to 4 were prepared.

**(4) Preparation of NCM-based lithium secondary battery sample** (not according to the invention)

Lithium secondary battery samples of Example 6 and Comparative Example 5 were prepared in the same manner as in the above (3), except that $Li[Ni_{0.8}Co_{0.1}Mn_{0.1}]O_2$ was used instead of $LiFePO_4$ as the cathode active material when preparing the cathode slurry.

**[Table 1]**

| | Additive | Auxiliary additive (wt. %) | | | Type of active material |
|---|---|---|---|---|---|
| | | $LiPO_2F_2$ | FEC | VC | |
| Example 1 | Additive **I,** 0.5 wt.% | - | 1 | 2 | LFP |
| Example 2 | Additive **I,** 1.0 wt.% | - | 1 | 2 | LFP |
| Example 3 | Additive **I,** 2.0 wt.% | - | 1 | 2 | LFP |
| Example 4 | Additive **I,** 3.0 wt.% | - | 1 | 2 | LFP |
| Example 5 | Additive **I,** 5.0 wt.% | - | 1 | 2 | LFP |
| Example 6* | Additive **I,** 1.0 wt.% | 0.5 | 1 | 2 | NCM |
| Comparative Example 1 | - | 0.5 | 1 | 2 | LFP |
| Comparative Example 2 | Additive **II,** 0.5 wt.% | - | 1 | 2 | LFP |
| Comparative Example 3 | Additive **II,** 1.0 wt.% | - | 1 | 2 | LFP |
| Comparative Example 4 | Additive **II,** 2.0 wt.% | - | 1 | 2 | LFP |
| Comparative Example 5 | - | 0.5 | 1 | 2 | NCM |
| *not according to the invention | | | | | |

The components described in Table 1 are as follows.

Additive I: Bis(dimethylamino)dimethylsilane
Additive II: N,N-dimethyltrimethylsilylamine (manufactured by Tokyo Chemical Industry CO., LTD.)
$LiPO_2F_2$: Lithium difluoro phosphate

FEC: Fluoro ethylene carbonate
VC: Vinylene carbonate

**<Experimental Example>**

**(1) Evaluation of initial resistance (C DCIR and D DCIR) (25°C)**

At 60% point of state-of-charge (SOC), when changing C-rate to 0.2C 0.5C, 1.0C, 1.5C, 2.0C, 2.5C and 3.0C, and performing charging and discharging on the lithium secondary batteries of the examples and comparative examples at the respective C-rates for 10 seconds, terminal points of the voltage were composed with an equation of a straight line and a slope thereof was adopted as the DCIR.

**(2) Evaluation of low temperature performance (-10°C)**

**1) Evaluation of low-temperature internal resistance**

The lithium secondary batteries of the examples and comparative examples were left in a -10°C chamber for 4 hours, then evaluation of low-temperature internal resistance (C_DCIR and D_DCIR) was performed thereon, respectively.

The low-temperature internal resistance evaluation was performed in the same manner as the resistance evaluation in the above (1).

**2) Evaluation of low-temperature discharge capacity**

The lithium secondary batteries of the examples and comparative examples were subjected to CC-CV charge up to 3.65 V at a current of 0.58A for 2 hours at -10°C, and then subjected to CC discharge up to 2.5 V at a current of 0.58 A, followed by measuring usable capacity (%) compared to the initial capacity.

**(3) Evaluation of high-temperature storage characteristics (60°C)**

**1) Evaluation of internal resistance after high-temperature storage**

At 60% point of SOC, when changing C-rate to 0.2C 0.5C, 1.0C, 1.5C, 2.0C, 2.5C and 3.0C, and performing charging and discharging on the lithium secondary batteries of Examples 1 to 5 and Comparative Examples 1 to 4 at the respective C-rates for 10 seconds, terminal points of the voltage were composed with an equation of a straight line and a slope thereof was adopted as the DCIR. The DCIR measured at the time of initial resistance evaluation was set to be R1, and the DCIR measured at the time of internal resistance evaluation after high-temperature storage was set to be R2, DCIR increase rate was calculated by the following equation.

$$\text{DCIR increase rate (\%)} = \{(R2-R1)/R1 + 1\} \times 100\ (\%)$$

**2) Measurement of thickness of the battery after high-temperature storage**

The lithium secondary batteries of the examples and comparative examples were subjected to 0.5C CC/CV charge (3.65 V 0.05C CUT-OFF) at 25°C, then battery thickness T1 was measured.

The charged lithium secondary batteries of Examples 1 to 5 and Comparative Examples 1 to 4 were left under the condition of being exposed to the atmosphere at 60°C for 6 weeks (using a thermostat), battery thickness T2 was measured. The battery thickness was measured using a plate thickness measuring device (Mitutoyo, 543-490B). The battery thickness increase rate was calculated by the following equation.

$$\text{Battery thickness increase rate (\%)} = \{(T2-T1)/T1 + 1\} \times 100\ (\%)$$

**3) Measurement of capacity retention rate (Ret) after high-temperature storage**

0.5C CC/CV charge (3.65 V, 0.05C CUT-OFF) and 0.5C CC discharge (2.5 V CUT-OFF) were repeatedly performed three times on the lithium secondary batteries of Examples 1 to 5 and Comparative Examples 1 to 4 at 25°C, then capacity C1 was measured at the third time. The charged lithium secondary batteries were stored at 60°C for 6 weeks,

followed by additionally leaving at room temperature for 30 minutes, and were subjected to 0.5C CC discharge (2.5 V CUT-OFF), then discharge capacity C2 was measured. The capacity retention rate was calculated by the following equation.

$$\text{Capacity retention rate (\%)} = C2/C1 \times 100\ (\%)$$

**4) Measurement of capacity recovery rate (Rec) after high-temperature storage**

After measuring the capacity retention rate of the lithium secondary batteries of Examples 1 to 5 and Comparative Examples 1 to 4 according to the above 3), 0.5C-rate CC/CV charge (3.65 V, 0.05C cut-off) and 0.5C-rate CC discharge (2.5 V cut-off) were performed on the batteries, and then the discharge capacity was measured.

The capacity recovery rate was calculated as a percentage by dividing the discharge capacity after measuring the capacity retention rate by the initial capacity measured in the above (1) of Experimental Example 1.

$$\text{Capacity recovery rate (\%)} = (\text{Discharge capacity after measuring capacity retention rate/Initial capacity}) \times 100$$

**[TABLE 2]**

| | | Example 1 | Example 2 | Example 3 | Example 4 | Example 5 |
|---|---|---|---|---|---|---|
| Initial performance | C_DCIR(mΩ) | 55.5 | 52.6 | 51.8 | 56.7 | 59.5 |
| | D_DCIR(mΩ) | 47.6 | 42.8 | 43.4 | 47.1 | 52.3 |
| Performance at -10°C | C_DCIR(mΩ) | 238.4 | 227.6 | 237.5 | 234.9 | 229.7 |
| | D_DCIR(mΩ) | 190.1 | 181.9 | 203.4 | 187.5 | 175.0 |
| | Discharge capacity (mAh) | 416. 9 | 431.8 | 428.9 | 442.9 | 443.1 |
| storage at 60°C 1) (6th week) | DCIR increase rate (%) | 139 | 130 | 125 | 145 | 151 |
| | Thickness increase rate (%) | 98 | 99 | 102 | 109 | 115 |
| | Ret. (%) | 85 | 85 | 87 | 84 | 83 |
| | Rec. (%) | 87 | 87 | 88 | 85 | 84 |

1) Storage at 60°C: 6th week after storage at 60°C upon charging to SOC 100%

**[Table 3]**

| | | Comparative Example 1 | Comparative Example 2 | Comparative Example 3 | Comparative Example 4 |
|---|---|---|---|---|---|
| Initial performance | C_DCIR(mΩ) | 58.8 | 55.6 | 65.9 | 70.6 |
| | D_DCIR(mQ) | 50.4 | 50.2 | 58.4 | 54.9 |
| Performance at -10°C | C_DCIR(mΩ) | 249. 6 | 237.6 | 254.1 | 252.7 |
| | D_DCIR(mΩ) | 203.4 | 187.5 | 215.5 | 220.2 |
| | Discharge capacity (mAh) | 407.4 | 428.9 | 390.5 | 391.6 |
| storage at 60°C 1) (6th week) | DCIR increase rate (%) | 156 | 152 | 131 | 197 |
| | Thickness increase rate (%) | 97 | 100 | 98 | 105 |
| | Ret. (%) | 85 | 85 | 84 | 81 |
| | Rec. (%) | 86 | 86 | 86 | 83 |

1) Storage at 60°C: 6th week after storage at 60°C upon charging to SOC 100%

**[Table 4]**

| | | Example 6* | Comparative Example 5 |
|---|---|---|---|
| Initial performance | C_DCIR(mΩ) | 31.8 | 34.7 |
| | D_DCIR(mΩ) | 33.3 | 36.8 |
| Performance at -10°C | C_DCIR(mΩ) | 159.0 | 197.7 |
| | D_DCIR(mΩ) | 167.0 | 179.6 |
| | Discharge capacity (mAh) | 1095.3 | 1352.7 |
| *not according to the invention | | | |

Referring to Tables 2 and 3 above, the lithium secondary batteries of Examples 1 to 5 using LFP as a cathode active material had improved the low-temperature performance (decreased resistance value and increased discharge capacity), as well as improved the high-temperature storage characteristics (decreased resistance increase rate and decreased thickness increase rate).

On the other hand, the lithium secondary battery of Comparative Example 1 had a higher resistance value and a lower discharge capacity at a lower temperature than those of the lithium secondary batteries of Examples 1 to 5. In addition, the lithium secondary batteries of Comparative Examples 2 to 4 had a higher resistance value at a low temperature than that of the lithium secondary batteries of Examples 1 to 5.

Referring to Table 4 above, the lithium secondary battery of Example 6 (not according to the invention) using NCM as a cathode active material had a lower resistance value at initial performance and a lower resistance value at a low temperature than those of the lithium secondary battery of Comparative Example 5.

## Claims

**1.** A lithium secondary battery comprising:

a cathode comprising a cathode active material;
an anode comprising an anode active material;
a separation membrane disposed between the cathode and the anode; and
an electrolyte which comprises an additive comprising a compound represented by Formula 1 below;
an organic solvent;
a lithium salt; and
an auxiliary additive comprising a cyclic carbonate compound and a fluorine-substituted cyclic carbonate compound:

[Formula 1]

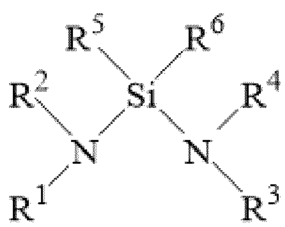

wherein in Formula 1, $R^1$ to $R^4$ are each independently hydrogen, or a substituted or unsubstituted $C_1$-$C_{10}$ alkyl group, and $R^5$ and $R^6$ are each independently hydrogen, a substituted or unsubstituted $C_1$-$C_{10}$ alkyl group, or a substituted or unsubstituted amine group;
wherein the cathode active material comprises lithium metal phosphate particles represented by Formula 4 below:

[Formula 4] $Li_wFe_xP_yO_{4+z}$

wherein in Formula 4, w, x, y and z are in a range of $0.9 \leq w \leq 1.2$, $0.99 \leq x \leq 1.01$, $0.9 \leq y \leq 1.2$, and $-0.1 \leq z \leq 0.1$.

2. The lithium secondary battery according to claim 1, wherein $R^1$ to $R^4$ are each independently a substituted or unsubstituted $C_1$-$C_6$ alkyl group, and $R^5$ and $R^6$ are each independently a substituted or unsubstituted $C_1$-$C_6$ alkyl group.

3. The lithium secondary battery according to claim 1 or 2, wherein $R^1$ to $R^4$ are each independently a substituted or unsubstituted $C_{1-2}$ alkyl group, and $R^5$ and $R^6$ are each independently a substituted or unsubstituted $C_{1-2}$ alkyl group.

4. The lithium secondary battery according to any one of claims 1 to 3, wherein the compound represented by Formula 1 is a compound represented by Formula 1-1 below:

[Formula 1-1]

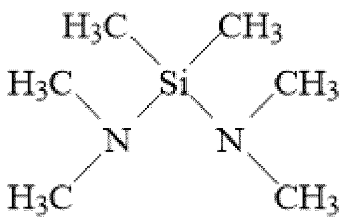

.

5. The lithium secondary battery according to any one of claims 1 to 4, wherein the additive is comprised in an amount of 0.1 to 10% by weight based on a total weight of the electrolyte.

6. The lithium secondary battery according to any one of claims 1 to 5, wherein the additive is comprised in an amount of 0.5 to 5% by weight based on the total weight of the electrolyte.

7. The lithium secondary battery according to any one of claims 1 to 6, wherein the organic solvent comprises at least one selected from the group consisting of a carbonate solvent, an ester solvent, an ether solvent, a ketone solvent, an alcohol solvent and an aprotic solvent.

8. The lithium secondary battery according to any one of claims 1 to 7, wherein the auxiliary additive further comprises at least one selected from the group consisting of a sultone compound, a cyclic sulfate compound, and a borate compound.

9. The lithium secondary battery according to any one of claims 1 to 8, wherein the auxiliary additive is comprised in an amount of 0.01 to 15% by weight based on the total weight of the electrolyte.

10. The lithium secondary battery according to any one of claims 1 to 9, wherein the auxiliary additive is comprised in an amount of 0.5 to 10% by weight based on the total weight of the electrolyte.

## Patentansprüche

1. Lithium-Sekundärbatterie, umfassend:

   eine Kathode, die ein kathodenaktives Material umfasst;
   eine Anode, die ein anodenaktives Material umfasst;
   eine Trennmembran, die zwischen der Kathode und der Anode angeordnet ist; und
   einen Elektrolyten, der ein Additiv umfasst, das eine durch die nachstehende Formel 1 dargestellte Verbindung umfasst;
   ein organisches Lösungsmittel;
   ein Lithiumsalz; und
   ein Hilfsadditiv, das eine cyclische Carbonatverbindung und eine fluorsubstituierte cyclische Carbonatverbindung umfasst:

[Formel 1]

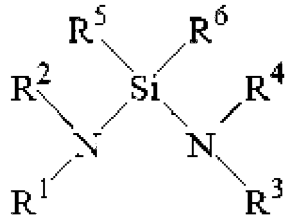

wobei in Formel 1 $R^1$ bis $R^4$ jeweils unabhängig Wasserstoff oder eine substituierte oder unsubstituierte $C_1$-$C_{10}$-Alkylgruppe sind und $R^5$ und $R^6$ jeweils unabhängig Wasserstoff, eine substituierte oder unsubstituierte $C_1$-$C_{10}$-Alkylgruppe oder eine substituierte oder unsubstituierte Amingruppe sind;
wobei das kathodenaktive Material Lithiummetallphosphatpartikel umfasst, die durch die nachstehende Formel 4 dargestellt sind:

[Formel 4] $Li_wFe_xP_yO_{4+z}$

wobei in Formel 4 w, x, y und z in einem Bereich von $0{,}9 \leq w \leq 1{,}2$, $0{,}99 \leq x \leq 1{,}01$, $0{,}9 \leq y \leq 1{,}2$ und $-0{,}1 \leq z \leq 0{,}1$ liegen.

**2.** Lithium-Sekundärbatterie nach Anspruch 1, wobei $R^1$ bis $R^4$ jeweils unabhängig eine substituierte oder unsubstituierte $C_1$-$C_6$-Alkylgruppe sind und $R^5$ und $R^6$ jeweils unabhängig eine substituierte oder unsubstituierte $C_1$-$C_6$-Alkylgruppe sind.

**3.** Lithium-Sekundärbatterie nach Anspruch 1 oder 2, wobei $R^1$ bis $R^4$ jeweils unabhängig eine substituierte oder unsubstituierte $C_{1-2}$-Alkylgruppe sind und $R^5$ und $R^6$ jeweils unabhängig eine substituierte oder unsubstituierte $C_{1-2}$-Alkylgruppe sind.

**4.** Lithium-Sekundärbatterie nach einem der Ansprüche 1 bis 3, wobei die durch die Formel 1 dargestellte Verbindung eine durch die nachstehende Formel 1-1 dargestellte Verbindung ist:

[Formel 1-1]

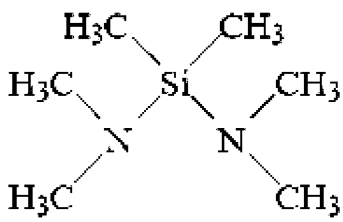

**5.** Lithium-Sekundärbatterie nach einem der Ansprüche 1 bis 4, wobei das Additiv in einer Menge von 0,1 bis 10 Gew.-%, bezogen auf das Gesamtgewicht des Elektrolyten, enthalten ist.

**6.** Lithium-Sekundärbatterie nach einem der Ansprüche 1 bis 5, wobei das Additiv in einer Menge von 0,5 bis 5 Gew.-%, bezogen auf das Gesamtgewicht des Elektrolyten, enthalten ist.

**7.** Lithium-Sekundärbatterie nach einem der Ansprüche 1 bis 6, wobei das organische Lösungsmittel mindestens eines umfasst, das aus der Gruppe ausgewählt ist, die aus einem Carbonatlösungsmittel, einem Esterlösungsmittel, einem Etherlösungsmittel, einem Ketonlösungsmittel, einem Alkohollösungsmittel und einem aprotischen Lösungsmittel besteht.

**8.** Lithium-Sekundärbatterie nach einem der Ansprüche 1 bis 7, wobei das Hilfsadditiv außerdem mindestens eines umfasst, das aus der Gruppe ausgewählt ist, die aus einer Sultonverbindung, einer cyclischen Sulfatverbindung und einer Boratverbindung besteht.

**9.** Lithium-Sekundärbatterie nach einem der Ansprüche 1 bis 8, wobei das Hilfsadditiv in einer Menge von 0,01 bis 15

Gew.-%, bezogen auf das Gesamtgewicht des Elektrolyten, enthalten ist.

**10.** Lithium-Sekundärbatterie nach einem der Ansprüche 1 bis 9, wobei das Hilfsadditiv in einer Menge von 0,5 bis 10 Gew.-%, bezogen auf das Gesamtgewicht des Elektrolyten, enthalten ist.

**Revendications**

**1.** Batterie secondaire au lithium comprenant :

une cathode comprenant un matériau actif cathodique ;
une anode comprenant un matériau actif d'anode ;
une membrane séparatrice disposée entre la cathode et l'anode ; et
un électrolyte comprenant un additif comprenant un composé représenté par la formule 1 ci-dessous ;
un solvant organique ;
un sel de lithium ; et
un additif auxiliaire comprenant un composé carbonate cyclique et un composé carbonate cyclique substitué par du fluor :

[Formule 1]

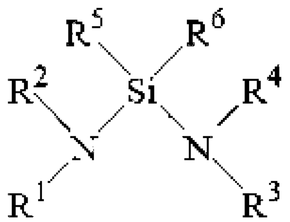

dans la formule 1, $R^1$ à $R^4$ représentent chacun indépendamment un atome d'hydrogène ou un groupe alkyle en $C_1$-$C_{(10)}$ substitué ou non substitué$_{10}$ et $R^5$ et $R^6$ représentent chacun indépendamment un atome d'hydrogène, un groupe alkyle en $C_1$-$C_{10}$ substitué ou non substitué ou un groupe amine substitué ou non substitué ;
le matériau cathodique actif comprenant des particules de phosphate métallique de lithium représentées par la formule 4 ci-dessous :

[Formule 4] $Li_w Fe_x P_y O_{4+z}$

dans laquelle, dans la formule 4, w, x, y et z sont compris dans une plage de $0,9 \leq w \leq 1,2$, $0,99 \leq x \leq 1,01$, $0,9 \leq y \leq 1,2$ et $-0,1 \leq z \leq 0,1$.

**2.** Batterie secondaire au lithium selon la revendication 1, dans laquelle $R^1$ à $R^4$ sont chacun indépendamment un groupe alkyle en $C_1$-$C_6$ substitué ou non substitué et $R^5$ et $R^6$ sont chacun indépendamment un groupe alkyle en $C_1$-$C_6$ substitué ou non substitué.

**3.** Batterie secondaire au lithium selon la revendication 1 ou 2, dans laquelle $R^1$ à $R^4$ représentent chacun indépendamment un groupe alkyle en $C_{1-2}$ substitué ou non substitué et $R^5$ et $R^6$ représentent chacun indépendamment un groupe alkyle en $C_{1-2}$ substitué ou non substitué.

**4.** Batterie secondaire au lithium selon l'une des revendications 1 à 3, dans laquelle le composé représenté par la formule 1 est un composé représenté par la formule 1-1 suivante :

[Formule 1-1]

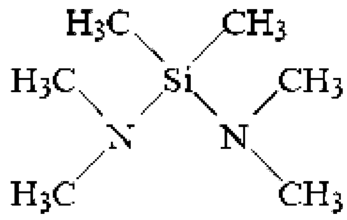

5. Batterie secondaire au lithium selon l'une des revendications 1 à 4, dans laquelle l'additif est contenu en une quantité de 0,1 à 10 % en poids par rapport au poids total de l'électrolyte.

6. Batterie secondaire au lithium selon l'une des revendications 1 à 5, dans laquelle l'additif est contenu en une quantité de 0,5 à 5 % en poids par rapport au poids total de l'électrolyte.

7. Batterie secondaire au lithium selon l'une des revendications 1 à 6, dans laquelle le solvant organique comprend au moins un solvant choisi dans le groupe constitué d'un solvant carbonate, d'un solvant ester, d'un solvant éther, d'un solvant cétone, d'un solvant alcool et d'un solvant aprotique.

8. Batterie secondaire au lithium selon l'une des revendications 1 à 7, dans laquelle l'additif auxiliaire comprend en outre au moins un composé choisi dans le groupe constitué d'un composé sulton, d'un composé sulfate cyclique et d'un composé borate.

9. Batterie secondaire au lithium selon l'une des revendications 1 à 8, dans laquelle l'additif auxiliaire est contenu en une quantité de 0,01 à 15 % en poids par rapport au poids total de l'électrolyte.

10. Batterie secondaire au lithium selon l'une des revendications 1 à 9, dans laquelle l'additif auxiliaire est contenu en une quantité de 0,5 à 10 % en poids par rapport au poids total de l'électrolyte.

[FIG. 1]

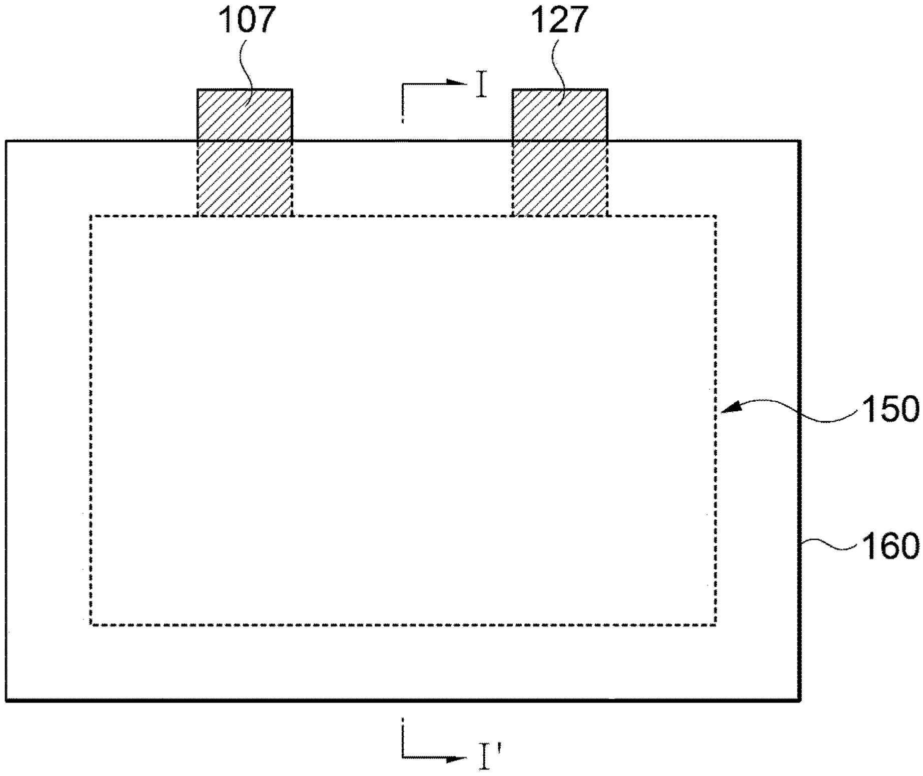


[FIG. 2]

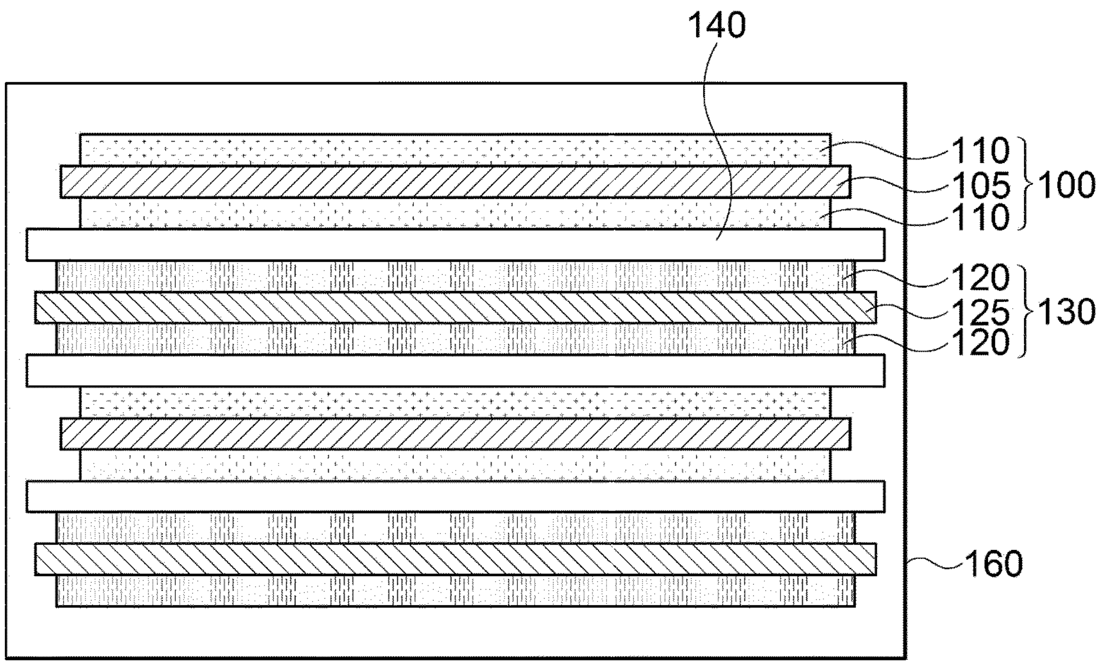

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 102411934
- CN 103094614 B
- US 2013216897 A1
- US 2006269846 A1